# EUROPEAN PATENT APPLICATION

(11) **EP 4 596 407 A1**
(43) Date of publication of application: **06.08.2025**
(21) Application number: 25154396.3
(22) Date of filing: 28.01.2025
(51) Int. Cl.: B64D 11/06, B60N 2/68

(54) **COMPOSITE BEAM JOINT FOR AIRCRAFT SEAT FRAME**

(30) Priority: 01.02.2024 US 202418430359
(71) Applicant: B/E Aerospace, Inc., Winston-Salem, NC 27105 (US)
(72) Inventor: GURVICH, Mark, East Hartford, 06108 (US); BALLOCCHI, Paolo, Newcastle, BT33 0RH (GB); MCCONNELL, David, Advance, NC, 27006 (US); STONER, Rebecca, Lewisville, NC, 27023 (US); PEARCE, Marc F., Winston-Salem, NC, 27104 (US)
(74) Representative: Dehns

(57) **Abstract**

A joint connect assembly may include a metallic ring connector (304) configured to couple with one or more tubular composite beams (222). The joint connect assembly may include a layer (302) arranged between the metallic ring connector and an external surface of the one or more tubular composite beams. The layer may be formed of a material configured to reduce local stress concentrations on the one or more tubular composite beams. The material of the layer may be an elastomeric material, e.g., the layer may include at least one of a natural rubber, synthetic rubber, or a combination thereof.

## Description

### TECHNICAL FIELD

The subject matter disclosed herein is related to the field of aircraft seats and, in particular, to a composite beam joint for an aircraft seat frame.

### BACKGROUND

The build of the seat (and any included components within the build) may be required to meet guidelines and/or standards. For example, in select industries, the seat must be able to withstand inertial and dynamic load conditions, abuse, fatigue, and other requirements as set forth by the industry guidelines and/or standards.

### SUMMARY

A joint connector assembly is disclosed, in accordance with one or more embodiments of the present disclosure. In embodiments, the joint connector assembly includes a metallic ring connector configured to couple to one or more tubular composite beams. In embodiments, the joint connector assembly includes a layer arranged between an internal surface of the metallic ring connector and an external surface of the one or more tubular composite beams, where the layer is formed of a material configured to reduce local stress concentrations on the one or more tubular composite beams.

In some embodiments, the one or more tubular composite beams may have at least one of a circular, quadratic, rectangular, or polygonal cross-sectional shape of the external surface of the one or more tubular composite beams.

In some embodiments, the layer may be in a hoop direction, where the layer may be one of a closed-loop as a single piece, an open-loop as the single piece, an open-loop including two or more connected pieces, or an open-loop including two or more disconnected pieces.

In some embodiments, the one or more tubular composite beams may be formed of reinforcing fibers embedded in a polymeric matrix, where fibers of the reinforcing fibers may include at least one of carbon fibers, glass fibers, organic fibers, or boron fibers, wherein the polymeric matrix formed of at least one of a thermoset or a thermoplastic matrix.

In some embodiments, the material of the layer may be an elastomeric material.

In some embodiments, the elastomeric material may include at least one of a natural rubber, synthetic rubber, or a combination thereof.

In some embodiments, the layer may include at least of one or more grooves or one or more bumps on at least an external surface of the layer or an internal surface of the layer.

In some embodiments, the layer may include a first set of one or more grooves or one or more bumps on the external surface of the layer and a second set of one or more grooves or one or more bumps on the internal surface of the layer.

In some embodiments, at least one or more cavities may be located inside of the layer.

In some embodiments, the material of the layer may be one of a metal or a metal alloy, where the layer may have at least one metallic sleeve placed around the external surface of the one or more tubular composite beams and oriented along an axial direction of the one or more tubular composite beams.

In some embodiments, the metallic ring connector may include at least one of one or more closed-loop arms or one or more open-loop flexible arms configured to bend upon movement or deformation of the one or more tubular composite beams under load or inertia.

In some embodiments, the metallic ring connector may include one or more rounded edges configured to reduce local stress concentrations in the one or more tubular composite beams upon movement or deformation of the one or more tubular composite beams.

An aircraft seat is disclosed, in accordance with one or more embodiments of the present disclosure. In embodiments, the aircraft seat includes a seatback. In embodiments, the aircraft seat includes a seat pan. In embodiments, the aircraft seat includes a base assembly couplable to a floor of an aircraft cabin via one or more floor fittings. In embodiments, the base assembly includes one or more tubular composite beams and one or more joint ring connector assemblies. In embodiments, each joint connector assembly includes a metallic ring connector configured to couple to the one or more tubular composite beams. In embodiments, each joint connector assembly includes a layer arranged between the metallic ring connector and an external surface of the one or more tubular composite beams, the layer formed of a material configured to reduce local stress concentrations on the one or more tubular composite beams.

In some embodiments, the layer may include at least of one or more grooves or one or more bumps on at least an external surface of the layer or an internal surface of the layer.

In some embodiments, the layer may include a first set of one or more grooves or one or more bumps on the external surface of the layer and a second set of one or more grooves or one or more bumps on the internal surface of the layer.

In some embodiments, the layer may be in a hoop direction, where the layer may be one of a closed-loop as a single piece, an open-loop as the single piece, an open-loop including two or more connected pieces, or an open-loop including two or more disconnected pieces.

In some embodiments, the one or more tubular composite beams may be formed of reinforcing fibers embedded in a polymeric matrix, where fibers of the reinforcing fibers may include at least one of carbon fibers, glass fibers, organic fibers, or boron fibers, wherein the polymeric matrix formed of at least one of a thermoset or a thermoplastic matrix.

In some embodiments, the material of the layer may be one of a metal or a metal alloy, where the layer may have at least one metallic sleeve placed around the external surface of the one or more tubular composite beams and oriented along an axial direction of the one or more tubular composite beams.

In some embodiments, the metallic ring connector may include at least one of one or more closed-loop arms or one or more open-loop flexible arms configured to bend upon movement or deformation of the one or more tubular composite beams under load or inertia.

In some embodiments, the metallic ring connector may include one or more rounded edges configured to reduce local stress concentrations in the one or more tubular composite beams upon movement or deformation of the one or more tubular composite beams.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are examples and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1A is an exploded schematic perspective view of a composite beam and joint.
FIG. 1B is an axial cross-sectional view of a composite beam and joint.
FIG. 2A is a simplified schematic perspective view of aircraft seats, in accordance with one or more embodiments of the present disclosure.
FIG. 2B is a simplified schematic perspective view of a base assembly of an aircraft seat, in accordance with one or more embodiments of the present disclosure.
FIG. 3A is an exploded schematic perspective view of a composite beam and joint, in accordance with one or more embodiments of the present disclosure.
FIG. 3B is an axial cross-sectional view of a composite beam and joint, in accordance with one or more embodiments of the present disclosure.
FIG. 4A is an axial cross-sectional view of a zoomed contact area of a composite beam joint, in accordance with one or more embodiments of the present disclosure.
FIG. 4B is an axial cross-sectional view of a zoomed contact area of a composite beam joint, in accordance with one or more embodiments of the present disclosure.
FIG. 4C is an axial cross-sectional view of a zoomed contact area of a composite beam joint, in accordance with one or more embodiments of the present disclosure.
FIG. 4D is an axial cross-sectional view of a zoomed contact area of a composite beam joint, in accordance with one or more embodiments of the present disclosure.
FIG. 5A is a schematic view of a representative area of a layer along its surface for the composite beam joint, in accordance with one or more embodiments of the present disclosure, where z and Θ are axial and hoop orientations, respectively.
FIG. 5B is a schematic view of a representative area of a layer along its surface for the composite beam joint, in accordance with one or more embodiments of the present disclosure, where z and Θ are axial and hoop orientations, respectively.
FIG. 5C is a schematic view of a representative area of a layer along its surface for the composite beam joint, in accordance with one or more embodiments of the present disclosure, where z and Θ are axial and hoop orientations, respectively.
FIG. 5D is a schematic view of a representative area of a layer along its surface for the composite beam joint, in accordance with one or more embodiments of the present disclosure, where z and Θ are axial and hoop orientations, respectively.
FIG. 5E is a schematic view of a representative area of a layer along its surface for the composite beam joint, in accordance with one or more embodiments of the present disclosure, where z and Θ are axial and hoop orientations, respectively.
FIG. 5F is a schematic view of a representative area of a layer along its surface for the composite beam joint, in accordance with one or more embodiments of the present disclosure, where z and Θ are axial and hoop orientations, respectively.
FIG. 6A is a circular diametric cross-sectional view of the composite beam joint, in accordance with one or more embodiments of the present disclosure.
FIG. 6B is a rectangular diametric cross-sectional view of the composite beam joint, in accordance with one or more embodiments of the present disclosure.
FIG. 7A is a diametric cross-sectional view of a closed-loop layer of the composite beam joint, in accordance with one or more embodiments of the present disclosure.
FIG. 7B is a diametric cross-sectional view of an open-loop layer of the composite beam joint, in accordance with one or more embodiments of the present disclosure.
FIG. 7C is a diametric cross-sectional view of an open-loop layer, comprising of two or more connected segments, of the composite beam joint, in accordance with one or more embodiments of the present disclosure.
FIG. 7D is a diametric cross-sectional view of an open loop layer, comprising of two or more disconnected segments, of the composite beam joint, in accordance with one or more embodiments of the present disclosure.
FIG. 8 is an axial cross-sectional view of a composite beam joint, in accordance with one or more embodiments of the present disclosure.
FIG. 9 is an axial cross-sectional view of a composite beam joint, in accordance with one or more embodiments of the present disclosure.
FIG. 10A is an axial cross-sectional view of a composite beam joint, in accordance with one or more embodiments of the present disclosure.
FIG. 10B is an axial cross-sectional view of a zoomed area of a composite beam joint shown in FIG. 10A under beam deformation, in accordance with one or more embodiments of the present disclosure.

### DETAILED DESCRIPTION OF THE INVENTION

Reference will now be made in detail to the subject matter disclosed, which is illustrated in the accompanying drawings.

Before explaining one or more embodiments of the disclosure in detail, it is to be understood the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one," "one or more," or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of or sub-combination of two or more such features, along with any other features which may not necessarily be expressly described or inherently present in the instant disclosure.

Seats may include components such as, but not limited to, a seatback, a seat pan, and a base assembly (e.g., a primary structure). In select industries the build of the seat (and any included components within the build) may be required to meet guidelines and/or standards. For example, the select aircraft seats must be formed of a material ductile enough to absorb energy. Further, aircraft seats may be required to meet aviation guidelines and/or standards. For instance, the select aircraft seats may need to be configured in accordance with aviation guidelines and/or standards put forth by, but not limited to, the Federal Aviation Administration (FAA), the European Aviation Safety Agency (EASA) or any other flight certification agency or organization; the American National Standards Institute (ANSI), or any other standards setting organization or company; or any other guidelines agency or organization; or the like. The base assembly may present difficulties such as, but not limited to, failing to meet load requirements (e.g., abuse, reliability, and dynamic load requirements (e.g., 4G lateral and 16g FWD load requirements)), or the like as set forth by the FAA in 14 C.F.R. Part25, Airworthiness Standards: Transport Category Airplanes)).

Continuous fibers, such as carbon fibers, are occasionally used in the build of aircraft seats in the form of composite materials, where the fibers are embedded in a polymer matrix. Although such fiber-reinforced polymer-matrix composites exhibit exceptional strength, stiffness and energy-absorbing properties as materials per unit weight, their efficient joining may be still a challenge, Therefore, metal alloys (e.g., aluminum and mild steel) are still used in the build of aircraft seats. However, metal alloys may increase the cost and weight of the aircraft seat, and it is often desirable to reduce the cost and weight of the seat.

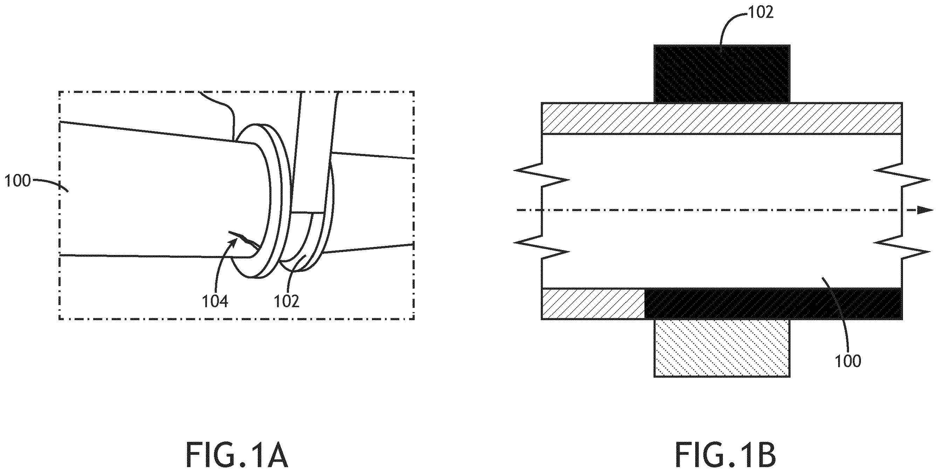

Also, in existing seat base assemblies using composite materials, composite beams 100 are connected to the seat frame via a metallic connector 102, as shown in FIGS. 1A-1B. However, the weakest locations of composite beams are in the vicinity of comers of corresponding metallic connectors due to obvious stress concentrations under bending, which may create cracks 104 in the composite beam under high levels of load.

As such, it would be desirable to provide a joint connector assembly configured to address one or more shortcomings of the previous designs based on seat frame beams, fabricated of composite materials. The assembly should reduce the risk of local damage in such composite beams. The assembly should be configured in accordance with aviation guidelines and/or standards. For example, the assembly should meet load requirements (e.g., abuse, reliability, and dynamic load requirements (e.g., 4G lateral and 16g FWD load requirements). However, at the same time, the assembly should minimize the risks of local damage 104. The assembly should also reduce the cost and weight of the seat in comparison with either conventional metallic designs or existing composite configurations.

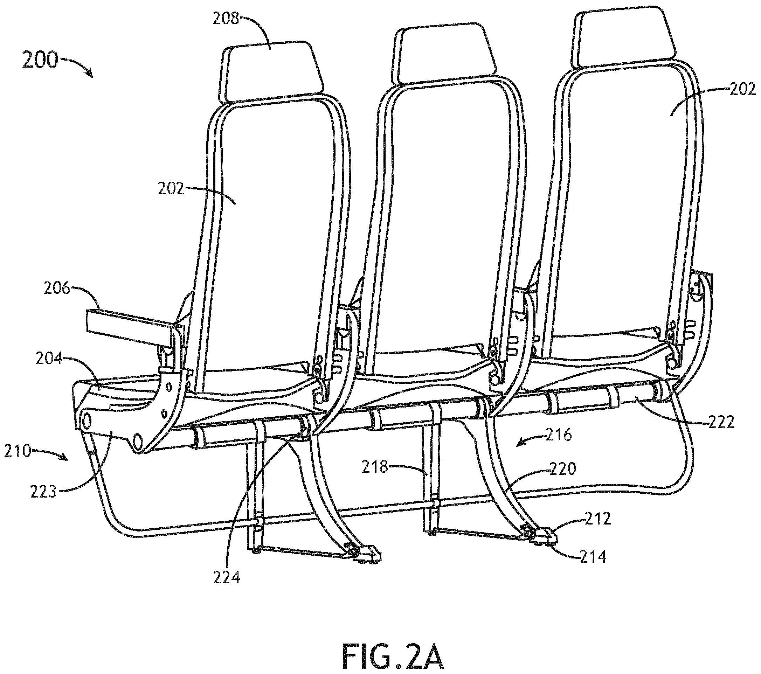

FIGS. 2A-2B in general illustrate an aircraft seat base assembly for an aircraft seat, in accordance with one or more embodiments of the disclosure.

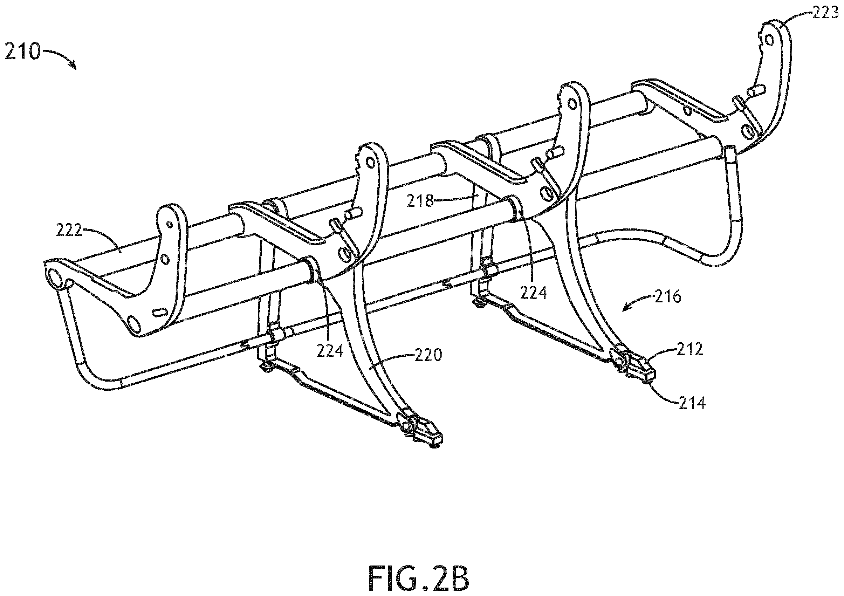

A base assembly may be integrated within an aircraft seat 200 installed within an aircraft cabin. For example, as shown in FIG. 2A, the one or more base assemblies may be integrated within an individual aircraft seat 200 installed within an aircraft cabin. By way of another example, as shown in FIG. 2B, the one or more base assemblies may be integrated within a row of aircraft seats 200 installed within an aircraft cabin. It is noted that FIGS. 2A-2B are provided merely for illustrative purposes and shall not be construed as limiting the scope of the present disclosure.

The aircraft seat 200 may include, but is not limited to, a business class or first-class passenger seat, an economy-class passenger seat, a crew member seat, or the like. It is noted the terms "aircraft seats" and "passenger seats" may be considered equivalent, for purposes of the disclosure.

The aircraft seat 200 may be rotatable about an axis (e.g., swivelable). The aircraft seat 200 may be fully positionable between the outer limits of motion as defined by the moveable components of the aircraft seat 200. Where the aircraft seat 200 is installed within a passenger compartment, the aircraft seat 200 may be fully positionable between the outer limits of motion as defined by one or more passenger compartment monuments of the passenger compartment. It is noted an upright or raised position may be considered a taxi, takeoff, or landing (TTL) position during select stages of flight (though the upright or raised position is not limited to use during the select stages of flight as the TTL position, but also may be used at any point during the flight), for purposes of the present disclosure. In addition, it is noted that any position that does not meet the above-defined requirements of the TTL position may be considered a non-TTL position, for purposes of the present disclosure. Further, it is noted the aircraft seat 200 may be actuatable (e.g., translatable and/or rotatable) from the TTL position to a non-TTL position, and/or vice versa. Further, it is noted the aircraft seat 200 may be capable of a fully upright or raised position, and that the TTL position may have a more reclined seatback cushion and a more angled upward seat pan cushion as compared to the fully upright or raised position. Therefore, the above description should not be interpreted as a limitation on the present disclosure but merely an illustration.

In general, an aircraft seat 200 may be translatable (e.g., trackable or slidable). The aircraft seat 200 may be rotatable about an axis cross-wise through the aircraft seat 200 into a position including, but not limited to, the upright or raised position, one or more lounge or reclined positions, and a lie-flat or bed position. For example, the aircraft seat 200 may transition directly between the upright or raised position and the lie-flat or bed position. By way of another example, it is noted the aircraft seat 200 may transition through one or more lounge or reclined positions between the upright or raised position and the lie-flat or bed position. By way of another example, the aircraft seat 200 may transition into one or more lounge or reclined positions in a motion separate from the transition between the upright or raised position and the lie-flat or bed position. Therefore, the above description should not be interpreted as a limitation on the scope of the disclosure but merely an illustration.

The aircraft seat 200 may include a seatback 202. The aircraft seat 200 may include a seat pan 204. The aircraft seat 200 may include one or more arms 206.

The seatback 202 may include a headrest 208. For example, the headrest 208 may be integrated within the seatback 202. By way of another example, the headrest 208 may be a separate component coupled to (or inserted into) the seatback 202. For instance, the headrest 208 may be movable relative to the seatback frame of the aircraft seat 200 (e.g., adjustable, removable, or the like).

The aircraft seat 200 may be coupled to a base assembly 210. For example, the seat frame of the aircraft seat 200 may be couplable to the base assembly 210. The base assembly 210 may be couplable to a floor of an aircraft cabin. For example, the base assembly 210 may be couplable to a floor of an aircraft cabin via one or more tracks (not shown), one or more track covers 212, and/or one or more floor fittings 214 (or track fasteners 214).

The base assembly 210 may include one or more leg sub-assemblies 216. Each leg sub-assembly 216 may include one or more legs. For example, each leg sub-assembly 216 may include a front leg 218 and a rear leg 220.

The one or more legs may be couplable to one or more portions of the seat frame of the aircraft seat 200. For example, the one or more front legs 218 may be couplable to a front portion of the seat frame of the aircraft seat 200. By way of another example, the one or more rear legs 220 may be couplable to a rear portion of the seat frame of the aircraft seat 200.

Referring to FIG. 2B, the one or more legs may be couplable to one or more structural beams 222 and/or one or more spreaders 223. For example, the one or more front legs 218 may be couplable to a front structural beam of the one or more structural beams 222 and a front portion of the one or more spreaders 223 (e.g., a front opening). By way of another example, the one or more rear legs 220 may be couplable to a rear structural beam of the one or more structural beams 222 and a rear portion of the one or more spreaders 223 (e.g., a rear opening). In this regard, the one or more legs 218, 220 may be configured to attach to the one or more structural beams 222 via one or more joint connector assemblies 224 and secure to the one or more tracks 212 located in the floor of the aircraft cabin via the one or more fittings 214.

The structural beams 222 may include one or more tubular composite beams 222. Variants of composite beams are generally discussed in U.S. Patent Application No. 18/429,869, filed on February 1, 2024.

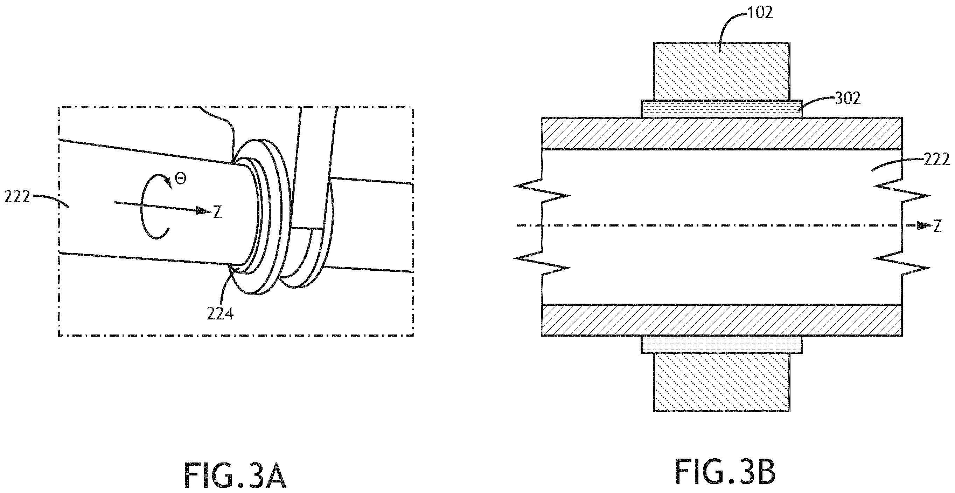

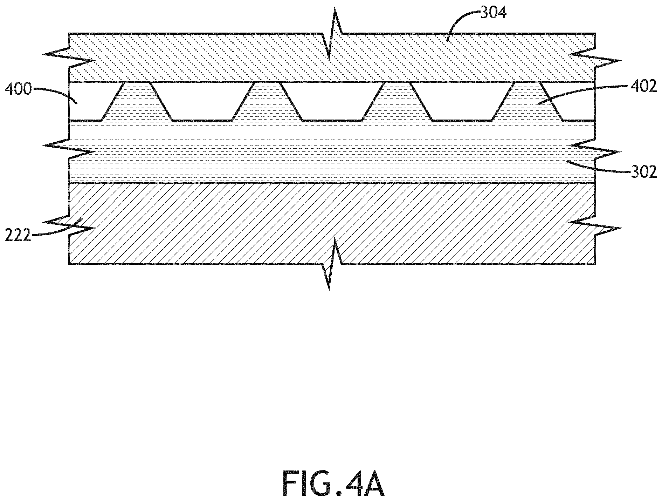

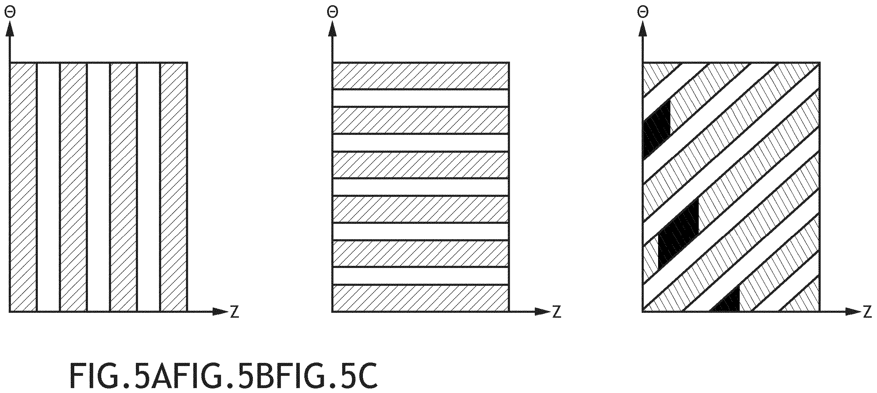

FIGS. 3-5 illustrate a joint connector assembly 224, in accordance with one or more embodiments of the present disclosure. In particular, FIG. 3 illustrates the overall concept of the proposed design with introduced soft layer 302. FIGS. 4A-4D show representative variants of through-thickness designs of introduced layer 302. FIGS. 5A-5F show representative variants of designs of introduced layer 302 as in-plane configurations along external or internal surfaces of the layer.

The joint connector assembly 224 may include a layer 302 between a metallic ring connector 304 and the composite beam 222. It is contemplated herein that in a preferred embodiment, the composite beam 222 is a hollow cylindrical tube with composite walls. The composite walls may have a laminated design, comprising of individual plies based on unidirectional reinforcement by fibers. The plies may be oriented in different directions to maximize desired structural performance of the beam, e.g., its stiffness, strength or energy absorption. Other designs of composite beams may be applied as well. For example, the layer 302 may be formed of a soft material suitable for reducing local stress concentrations and controlling beam flexibility as needed. The layer 302 may be formed of any suitable material such as, but not limited to, one or more elastomeric materials (e.g., natural or synthetic rubber, or a combination thereof), or the like.

The layer 302 may have thickness between 1% and 40% of a larger cross-sectional size of the external surface contour of the beam.

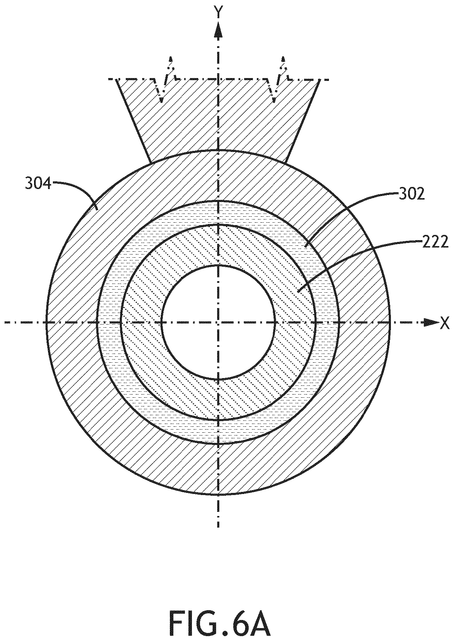

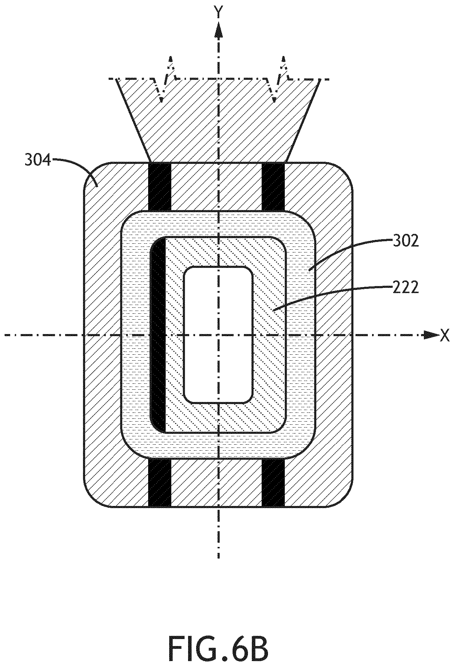

The composite cylindrical beam 222 may have at least one of a circular, quadratic, rectangular, or polygonal cross-sectional shape of the external surface of the beam 306. For example, as shown in FIG. 6A, the composite beam 222 may have a circular cross-section. By way of another example, as shown in FIG. 6B, the composite beam 222 may have a rectangular cross-section.

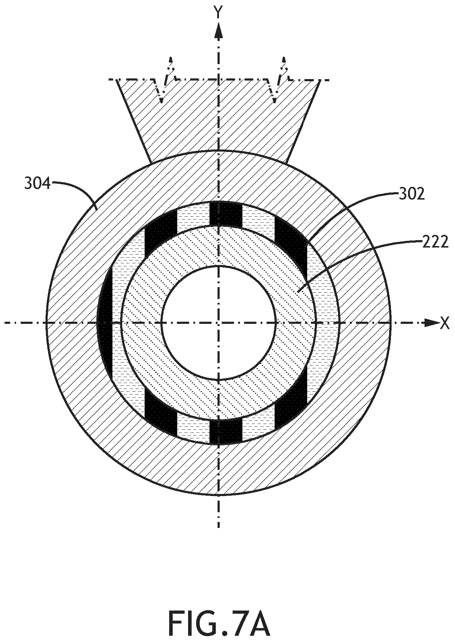

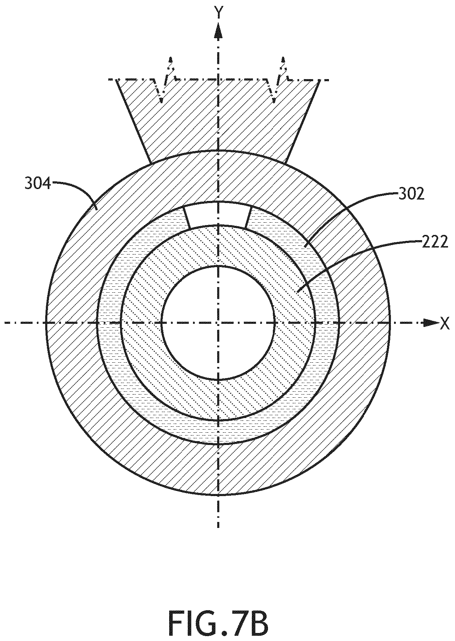

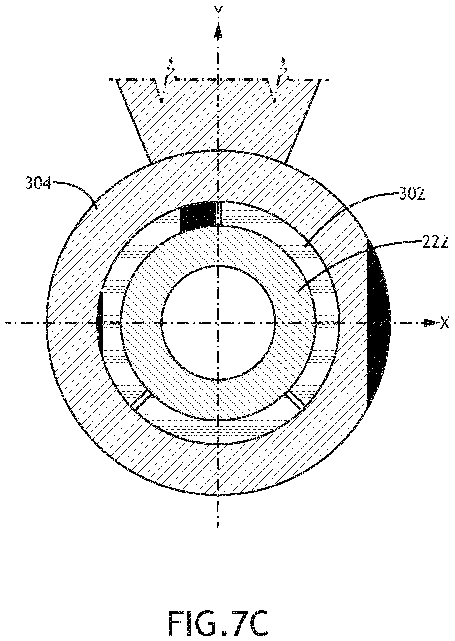

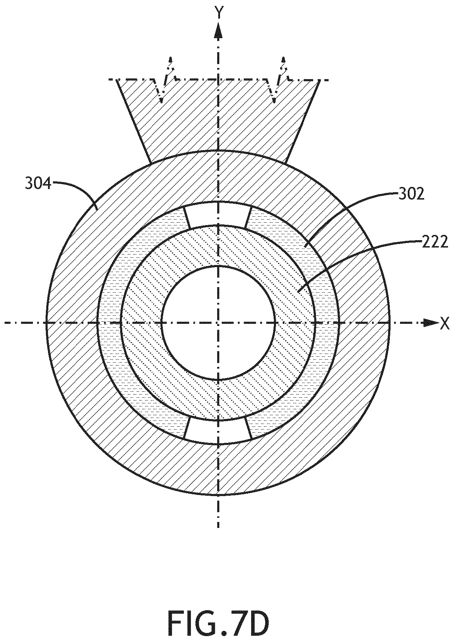

Referring to FIGS. 7A-7D, the layer 302 may be placed in the hoop direction depending on convenience of its installation. For example, as shown in FIG. 7A, the layer 302 may be a closed-loop single piece layer. By way of another example, as shown in FIG. 7B, the layer 302 may be an open-loop single piece layer. By way of another example, as shown in FIG. 7C, the layer 302 may be an open-loop layer with two or more connected pieces. By way of another example, as shown in FIG. 7D, the layer 302 may be an open-loop layer with two or more disconnected pieces, i.e., with gaps between them.

The composite cylindrical beam 222 may be formed of any composite material such as, but not limited to reinforcing fibers embedded in a polymeric matrix. The fibers may be any combination of carbon, glass, organic, or boron fibers, or the like. The polymeric matrix may include at least one of a thermoset or thermoplastic matrix.

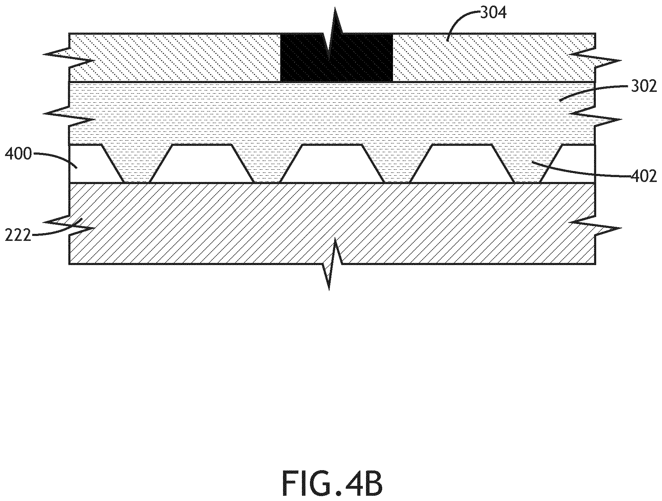

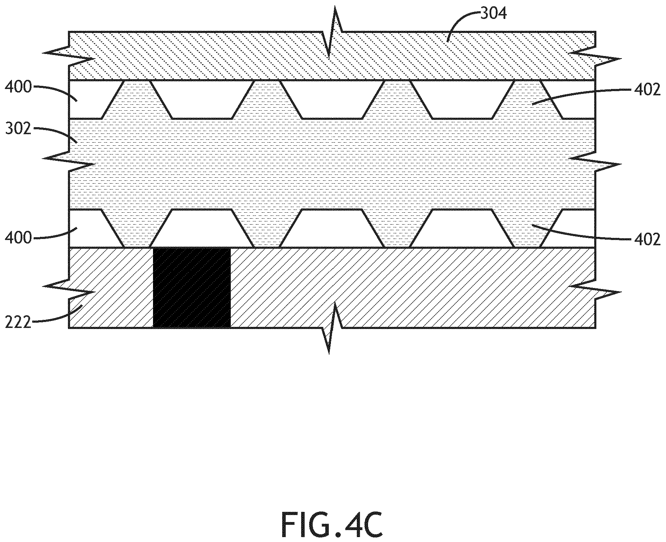

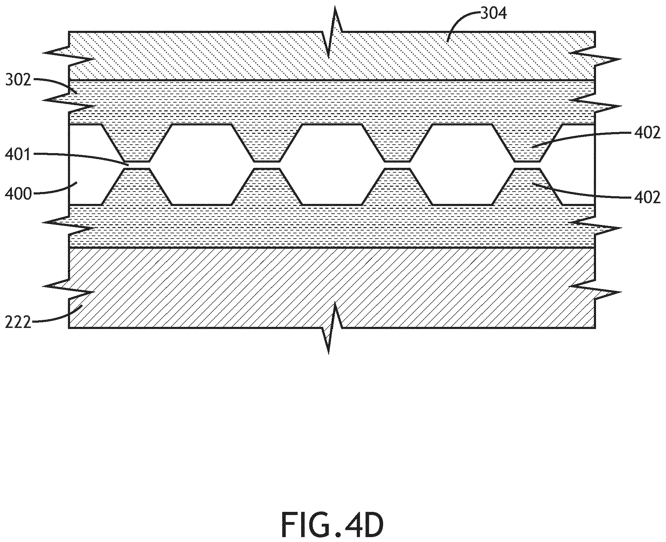

The layer 302 may include one or more grooves 400 and one or more bumps 402. It is contemplated herein that the layer 302 may include any configuration of grooves 400 and bumps 402 of different shapes respectively. The grooves, bumps and/or internal cavities may be needed to provide room for deformation under local contact compression. These shapes may help to mitigate the challenge of volumetric incompressibility of most relevant materials of the layer, such as elastomers and, in particular, different types of rubbers. For example, as shown in FIG. 4A, the layer 302 may include radially outward circumferential grooves 400 and bumps 402. By way of another example, as shown in FIG. 4B, the layer 302 may include radially inward circumferential grooves 400 and bumps 402. By way of another example, as shown in FIG. 4C, the layer 302 may include both radially outward circumferential grooves 400 and bumps 402 and radially inward circumferential grooves 400 and bumps 402 at both external surfaces. By way of another example, as shown in FIG. 4D, the layer 302 may include internal circumferential grooves 400 and bumps 402 at both internal surfaces, where the layer 302 includes one or more cavities located inside the layer 302. In some instances, each internal groove 400 and bump 402 surface may be fabricated individually and joined together. In other instances, the internal groove 400 and bump 402 surface may be fabricated together. It is noted that that different geometrical shapes of grooves, bumps and cavities may be applied according to specifics of the material, overall seat structures and load conditions. Demonstrated shapes, e.g., conical bumps, are shown as representative examples. Similarly, the circumferential orientation of grooves, bumps and cavities is shown as a representative example. Other variants or their orientation are illustrated below on examples of FIGS. 5A-5F.

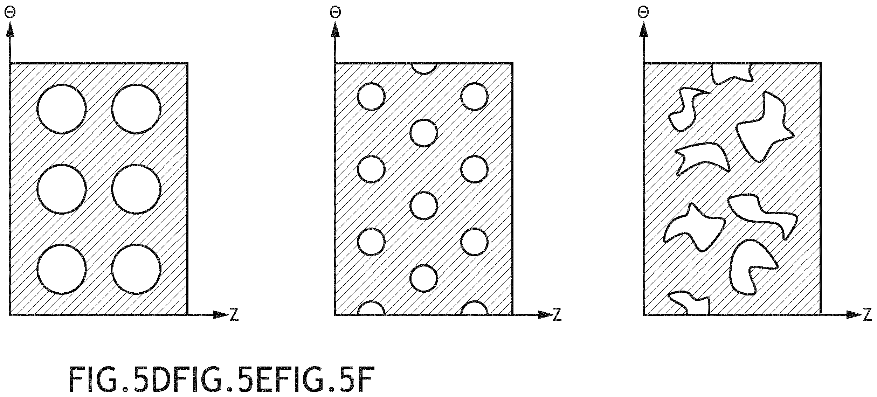

Further, it is contemplated herein that the layer 302 may include any surface-wide positioning of grooves 400 and bumps 402. For example, as shown in FIG. 5A, the grooves 400 may be oriented in the hoop direction. By way of another example, as shown in FIG. 5B, the grooves 400 may be oriented in the axial direction. By way of another example, as shown in FIG. 5C, the grooves 400 may be oriented under a non-zero angle with respect to the hoop or axial axis. By way of another example, as shown in FIG. 5D, the bumps 402 (or pits) may be placed in a representative regular (e.g., rectangular) order. By way of another example, as shown in FIG. 5E, the bumps 402 (or pits) may be placed in a representative regular (diamond) order. By way of another example, as shown in FIG. 5F, the bumps 402 (or pits) may be placed in an arbitrary order and have any arbitrary uniform or non-uniform shapes.

FIG. 6A-6B illustrate variants of application of the concept for circular and non-circular (e.g., rectangular) cross-sections of the beam. The variants are illustrated as corresponding diametric cross-sections (x-y plane)

FIGS. 7A-7D illustrate variants of placing layer 302 in the hope orientation. Specifically, they show cases of a single closed-loop piece (FIG. 7A), single open-loop piece (FIG. 7B), multiple open-loop connected pieces (FIG. 7C) and multiple open-loop discontinuous, i.e., with some gaps in the hoop orientation, pieces (FIG. 7D). Multiple pieces mean two or more pieces of the same or different sizes.

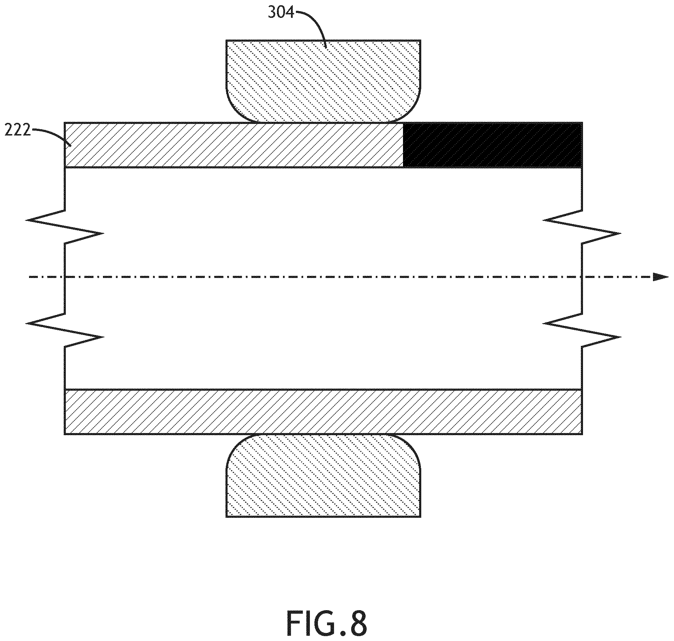

FIGS. 8-10 show additional variants of local stress reduction primarily through optimization of metallic parts of the assembly. In some embodiments, the metallic ring connector 304 may have a smooth transient boundary without sharp corners. For example, as shown in FIG. 8, the metallic ring connector 304 may include rounded corners 600.

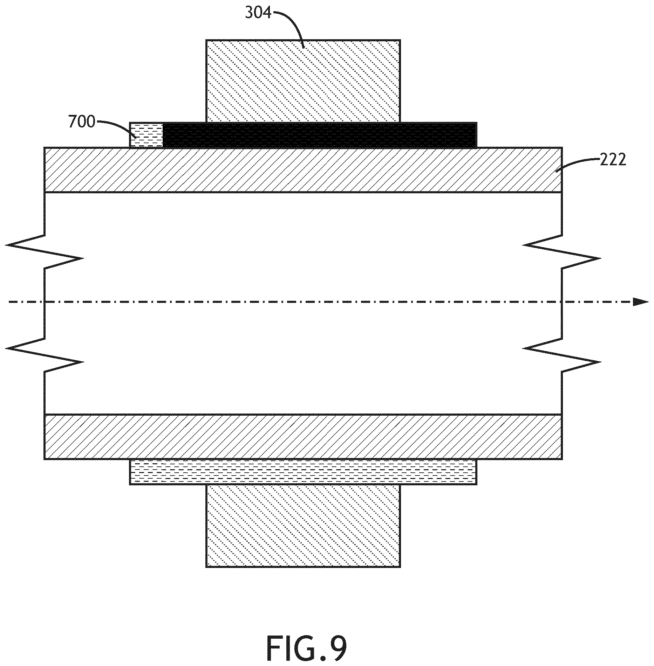

Referring to FIG. 9, in some embodiments, the joint connector assembly 224 may include a metallic sleeve 700. For example, the joint connector assembly 224 may include the metallic sleeve 700 between the metallic ring connector 304 and the composite cylindrical beam 222. In this regard, the metallic sleeve 700 may be used as the layer 302, where maximum stress concentrations occur to prevent cracks in the one or more structural beams 222.

The metallic sleeve 700 may be formed of at least one of a metal or a metal alloy.

The metallic sleeve 700 may be placed around the external surface of the beams 222. For example, the metallic sleeve 700 may be oriented along an axial direction of the beams 222.

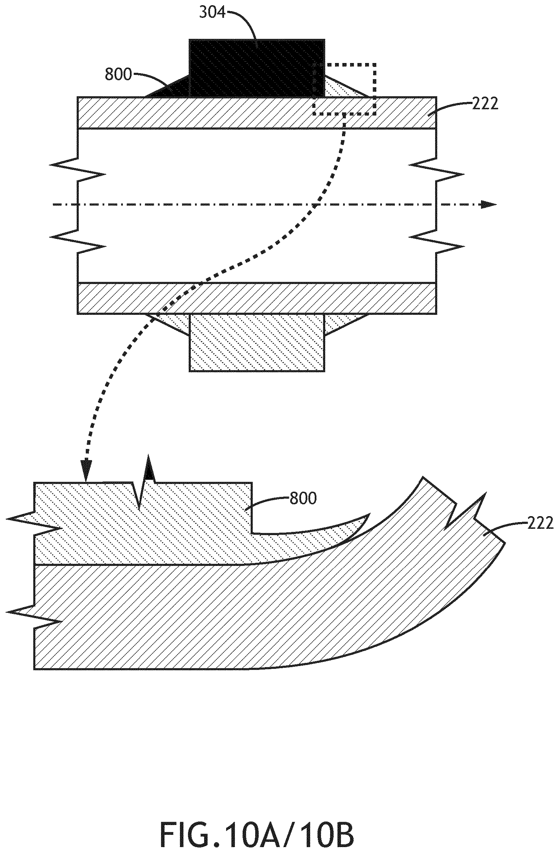

Referring to FIGS. 10A-10B, in some embodiments, the joint connector assembly 224 may include flexible arms 800. The flexible arms 800 may be configured to bend upon movement of deformation of the composite beam 222 under load or inertia, as shown in FIG. 10B. In some instances, the flexible arms 800 may include axial splits to avoid hoop stressed during bending of the composite beam 222.

The flexible arms 800 may include one or more closed-loop or open-looped arms 800.

It is noted the joint connector assembly 224 may be configured to work with any aircraft seat 200 and/or any set of components in the aircraft seat 200. For example, the joint connector assembly 224 may be configured to take into account any changes in shape of the components of the aircraft seat 200 (e.g., within an x-y plane forming a seating surface for an occupant), where the changes in shape may be caused by or otherwise dependent on the location of the aircraft seat 200 within the aircraft cabin.

Although embodiments of the disclosure illustrate the joint connector assembly 224 being integrated within the aircraft seat 200, it is noted, however, that the joint connector assembly 224 and/or components of the joint connector assembly 224 are not limited to the aviation environment and/or the aircraft components within the aviation environment. For example, the joint connector assembly 224 and/or components of the joint connector assembly 224 may be configured for any type of vehicle known in the art. By way of another example, the joint connector assembly 224 and/or components of the joint connector assembly 224 may be configured for commercial or industrial use in either a home or a business. Therefore, the above description should not be interpreted as a limitation on the present disclosure but merely an illustration.

Although the disclosure has been described with reference to the embodiments illustrated in the attached drawing figures, equivalents may be employed and substitutions made herein without departing from the scope of the claims. Components illustrated and described herein are merely examples of a system/device and components that may be used to implement embodiments of the disclosure and may be replaced with other devices and components without departing from the scope of the claims. Furthermore, any dimensions, degrees, and/or numerical ranges provided herein are to be understood as non-limiting examples unless otherwise specified in the claims.

## Claims

1. A joint connector assembly comprising:
a metallic ring connector (304) configured to couple to one or more tubular composite beams (222); and
a layer (302) arranged between an internal surface of the metallic ring connector and an external surface of the one or more tubular composite beams, the layer formed of a material configured to reduce local stress concentrations on the one or more tubular composite beams.

2. The assembly of Claim 1, wherein the one or more tubular composite beams (222) have at least one of:
a circular, quadratic, rectangular, or polygonal cross-sectional shape of the external surface of the one or more tubular composite beams.

3. The assembly of Claim 1 or 2, wherein the layer (302) is in a hoop direction, wherein the layer is one of:
a closed-loop as a single piece, an open-loop as the single piece, an open-loop including two or more connected pieces, or an open-loop including two or more disconnected pieces.

4. The assembly of Claim 1, 2 or 3, wherein the one or more tubular composite beams (222) are formed of reinforcing fibers embedded in a polymeric matrix, wherein fibers of the reinforcing fibers include at least one of carbon fibers, glass fibers, organic fibers, or boron fibers, wherein the polymeric matrix formed of at least one of a thermoset or a thermoplastic matrix.

5. The assembly of Claim 1, 2, 3 or 4, wherein the material of the layer (302) is an elastomeric material; and optionally wherein the elastomeric material includes at least one of:
a natural rubber, synthetic rubber, or a combination thereof.

6. The assembly of any of Claims 1 to 5, wherein the layer (302) includes at least of one or more grooves (400) or one or more bumps (402) on at least an external surface of the layer or an internal surface of the layer; and optionally wherein the layer includes a first set of one or more grooves or one or more bumps on the external surface of the layer and a second set of one or more grooves or one or more bumps on the internal surface of the layer.

7. The assembly of any of Claims 1 to 6, wherein at least one or more cavities are located inside of the layer (302).

8. The assembly of any of Claims 1 to 7, wherein the material of the layer (302) is one of a metal or a metal alloy, wherein the layer has at least one metallic sleeve (700) placed around the external surface of the one or more tubular composite beams (222) and oriented along an axial direction of the one or more tubular composite beams.

9. The assembly of any of Claims 1 to 8, wherein the metallic ring connector (304) includes at least one of one or more closed-loop arms (800) or one or more open-loop flexible arms (800) configured to bend upon movement or deformation of the one or more tubular composite beams (222) under load or inertia; and/or wherein the metallic ring connector includes one or more rounded edges (600) configured to reduce local stress concentrations in the one or more tubular composite beams upon movement or deformation of the one or more tubular composite beams.

10. An aircraft seat (200), the aircraft seat comprising:
a seatback (202);
a seat pan (204); and
a base assembly (210) couplable to a floor of an aircraft cabin via one or more floor fittings (214), the base assembly including one or more tubular composite beams (222) and one or more joint ring connector assemblies, each joint connector assembly comprising:
a metallic ring connector (304) configured to couple to the one or more tubular composite beams (222); and
a layer (302) arranged between the metallic ring connector and an external surface of the one or more tubular composite beams, the layer formed of a material configured to reduce local stress concentrations on the one or more tubular composite beams.

11. The aircraft seat of Claim 10, wherein the layer (302) includes at least one of one or more grooves (400) or one or more bumps (402) on at least an external surface of the layer or an internal surface of the layer; and optionally wherein the layer includes a first set of one or more grooves or one or more bumps on the external surface of the layer and a second set of one or more grooves or one or more bumps on the internal surface of the layer.

12. The aircraft seat of Claim 10 or 11, wherein the layer (302) is in a hoop direction, wherein the layer is one of:
a closed-loop as a single piece, an open-loop as the single piece, an open-loop including two or more connected pieces, or an open-loop including two or more disconnected pieces.

13. The aircraft seat of Claim 10, 11 or 12, wherein the one or more tubular composite beams (222) are formed of reinforcing fibers embedded in a polymeric matrix, wherein fibers of the reinforcing fibers include at least one of carbon fibers, glass fibers, organic fibers, or boron fibers, wherein the polymeric matrix formed of at least one of a thermoset or a thermoplastic matrix.

14. The aircraft seat of Claim 10, 11, 12 or 13, wherein the material of the layer (302) is one of a metal or a metal alloy, wherein the layer has at least one metallic sleeve (700) placed around the external surface of the one or more tubular composite beams (222) and oriented along an axial direction of the one or more tubular composite beams.

15. The aircraft seat of any of Claims 10 to 14, wherein the metallic ring connector (304) includes at least one of one or more closed-loop arms (800) or one or more open-loop flexible arms (800) configured to bend upon movement or deformation of the one or more tubular composite beams (222) under load or inertia; and/or wherein the metallic ring connector includes one or more rounded edges configured to reduce local stress concentrations in the one or more tubular composite beams upon movement or deformation of the one or more tubular composite beams.
